# EUROPEAN PATENT SPECIFICATION

(11) **EP 0 415 639 B1**
(45) Date of publication and mention of the grant of the patent: **18.10.1995**
(21) Application number: 90309208.8
(22) Date of filing: 22.08.1990
(51) Int. Cl.: G09F 9/313

(54) **Display tube assembly**
Röhrenanzeigevorrichtung
Dispositif d'affichage à tubes

(30) Priority: 28.08.1989 JP 221022/89
(43) Date of publication of application: 06.03.1991
(73) Proprietor: SONY CORPORATION, Tokyo 141 (JP)
(72) Inventor: Ohkoshi, Akio c/o Patents Division, Shinagawa-ku Tokyo 141 (JP); Nakagawa, Hideaki c/o Patents Division, Shinagawa-ku Tokyo 141 (JP); Tsuruta, Koji c/o Patents Division, Shinagawa-ku Tokyo 141 (JP); Kato, Hiroshi c/o Patents Division, Shinagawa-ku Tokyo 141 (JP)
(74) Representative: Purvis, William Michael Cameron

(56) References cited:
- FR-A- 2 389 938
- US-A- 3 085 224
- PATENT ABSTRACTS OF JAPAN vol. 013, no. 580 (P-980)December 21, 1989 & JP-A- 01 244 491 (SONY CORPORATION ) September 28, 1989

## Description

The invention generally relates to display apparatus and, particularly, to a display tube assembly for such display apparatus.

Our earlier patent specifications US-A-4682239 and EP-A-149550 disclose display apparatus in which a plurality of display cells are arranged in a two-dimensional manner and are driven by predetermined data thereby displaying a desired video image.

Our patent specification US-A-4727284 discloses a fluorescent display tube which is suitably applied to a display cell used in such display apparatus.

Such a fluorescent display tube is illustrated in the accompanying drawings wherein Figure 1 is a front view, Figure 2 is a side view and Figure 3 is a perspective view. The drawings have been partially cutaway and illustrate a luminescent display tube for use as a unitary cell.

As illustrated, a glass housing 11 is composed of a front panel 11A, a back panel 11B and a side wall plate 11C. The glass housing 11 is shaped to have the dimensions of, for example, 41 mm in height and 86 mm in width on the front panel 11A. In the glass housing 11, there are arranged eight luminescent trios 12 (12a, 12b, 12c, 12d, 12e, 12f, 12g and 12h) which function as luminescent display components which are composed of phosphor layers that serve as picture elements and eight electrode units 13 (13a, 13b, 13c, 13d, 13e, 13f, 13g and 13h) corresponding to the luminescent trios 12.

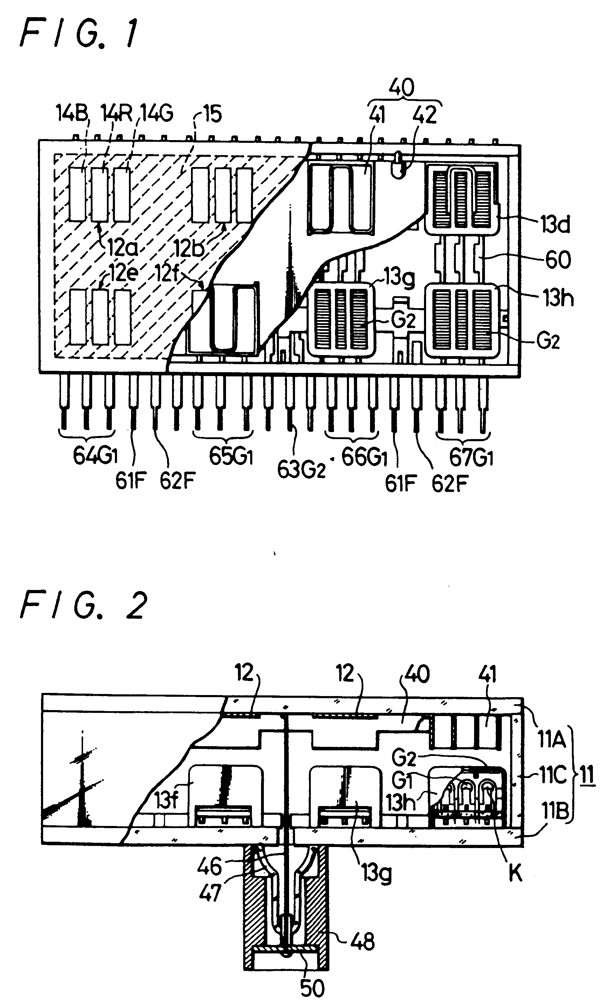

The eight luminescent trios 12 are formed by coating phosphor layers on the inner surface of the front panel 11A in a manner such that four trios are arrayed in each of an upper row and a lower row. In a particular example each of the luminescent trios 12 is composed of three phosphor layers 14R, 14G and 14B which respectively emit red, green and blue light. In the configuration as illustrated in Figure 1, a conductive carbon layer 15 is printed in the shape of a frame on the inner surface of the front panel 11A and the red phosphor layer 14R, the green phosphor layer 14G and the blue phosphor layer 14B are printed to correspond to individual blank areas in the frame and partially override or overlap the carbon layer 15. A metal backing layer of aluminium or the like is deposited through a film layer on the phosphor layers.

The electrode units 13 are disposed in the proximity of the rear panel 11B at positions opposite to the luminescent trios 12, respectively. In each of the electrode units 13, there are mounted three cathode wires K (K_{R}, K_{G} and K_{B}) which are mounted opposite respectively the red phosphor layer 14R, the green phosphor layer 14G and the blue phosphor layer 14B of the respective luminescent trio 12 respectively and three first grids G₁ (G_{1 R}, G_{1 G} and G_{1 B}) are mounted opposite to the three wire cathodes K respectively and an additional common second grid G₂ is mounted in opposing relationship to the three first grids G₁.

Then the second grids G₂ of the four electrode units 13a to 13d mounted in one horizontal row are connected to each other and the second grids G₂ of the four electrode units 13e to 13h mounted to another row are connected with each other in a similar manner. Also, the first grids G₁ are mutally connected between every two electrode units arrayed in a vertical column such as between 13a and 13e, between 13b and 13f, between 13c and 13g, and between 13d and 13h respectively. Thus, with respect to the two electrode units mounted in a vertical column, the first grids G_{1 R} at the respective centres are mutally connected and similarly the first grids G_{1 B} and G_{1 G} at the right ends are mutually connected together and also the first grids G_{1 G} and G_{1 B} at the left ends are mutually connected together. In this particular example, the cathodes K are connected in series with each other.

The respective ends of the wire cathodes K, first and second grids G₁ and G₂ are led out through a sealed region between the rear panel 11B and the bottom end face of the side wall plate 11C.

There are shown further leads 61F of the wire cathodes which are connected between the electrode units 13a to 13d; leads 62F of the wire cathodes which are connected between the electrode units 13e to 13h; leads 63G₂ of the second grids G₂ which are connected between the electrode units 13a through 13h; leads 64G₁ of the three first grids G1 mutually connected between the electrode units 13a and 13e; leads 65G₁ of the three first grids G1 mutually connected between the electrode units 13b and 13f; leads 66G₁ of the three first grids G1 mutually connected between the electrode units 13c and 13g; and leads 67G₁ of the three first grids G1 mutually connected between the electrode units 13d and 13h.

A separator assembly 40 is formed of a conductive material and is positioned so as to surround the respective phosphor layers 14R, 14G and 14B of each of the eight luminescent trios 12. The separator assembly 40 functions as a so-called diffusion lens to expand electron beams so that the electron beams may properly impinge upon the whole area of the corresponding phosphor layers. The separator assembly 40 also functions as a power supply device to supply an anode voltage from an anode lead 46 to the respective luminescent trios 12. The anode lead 46 to which the high voltage is applied is connected at one end thereof to an electrode plate 42 of the separator assembly 40 and is also led out to the outside at the other end thereof through a tip off tube 47 attached to the rear panel 11B of the glass housing 11. The anode lead 46 is composed of a Dumet wire (Cu alloy) wound with glass in its portion adjacent to the tip off tube 47, thus making the anode lead 46 and the tip off tube 47 airtight.

An anode voltage of, for example, about 8 kV is supplied through the anode lead 46 and the separator assembly 40 to the respective red, green and blue phosphor layers 14R, 14G and 14B of each of the luminescent trios 12. The first grid G₁ is supplied with a voltage of lower than, for example, 0 V (OFF) to 5 V(ON), and the second grid G₂ is supplied with a fixed voltage of lower than, for example, 10 V. Further, the wire cathode K is supplied with a voltage of lower than, for example, 0 V to 5 V as a row selecting voltage.

Accordingly, under the condition that, for example, 0 V is applied to the wire cathodes K of the electrode units 13a to 13d of the upper row and, for example, a cutoff voltage 5 V is applied to the wire cathodes K of the electrode units 13e to 13h of the lower row, if a voltage of 5 V is applied through the lead 64G₁ to the first grid G₁, then the first luminescent trio 12a will be rendered luminous. When a voltage of 0 V is applied to the first grid G₁, then the electron beam is cut off so that the corresponding phosphor layer is not rendered luminous.

If a voltage is sequentially supplied to the first grids G₁ through the leads 64G₁, 65G₁, 66G₁ and 67G₁, the luminescent trios 12a to 12d of the upper row will be rendered luminous. Then, if 0 V is applied to the wire cathodes K and 5 V is similarly applied to the first grids G₁ through the leads 64G₁ to 67G₁ in that order, the luminescent trios 12e to 12h of the lower row will be rendered luminous. That is, the phosphor layers of respective colours, namely, luminescent segments 14 are selectively turned ON and OFF by the voltages supplied to the wire cathodes K and the first grids G₁.

The display apparatus is formed by arranging a number of the above-mentioned display tubes in a two-dimensional fashion. In such display tubes, different display signals are supplied to the fluorescent segments at every frame, resulting in the displays being performed in accordance with the respective display signals. The display in each luminescent segment is carried out at the unit of ON and OFF display operation so that, when the signal of the ON period is pulse width modulated (PWM), brightness modulation is carried out.

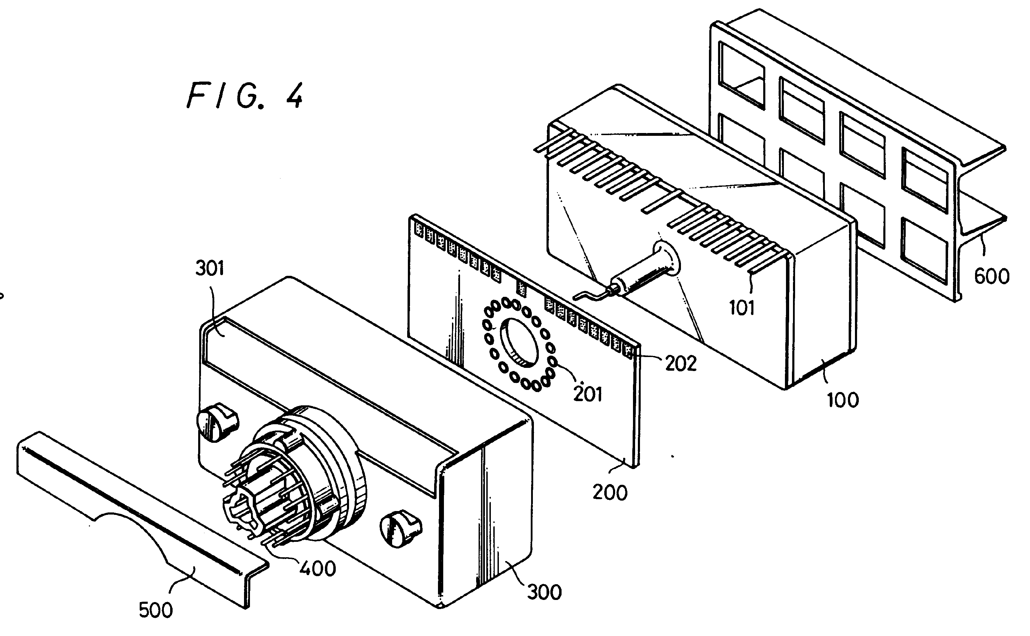

The display apparatus using the above-mentioned display tubes is generally located outdoors so that each display tube must be made watertight. In that case, a display tube assembly including the above display tube is employed as shown in Figure 4.

Figure 4 is an exploded, perspective view of a display tube assembly, and which illustrates the display cell from the rear side thereof.

Figure 4 shows a display tube 100, a printed circuit board 200 and a case 300. A plug pin 400 protrudes outwardly from the inside of the case 300 to supply a signal. Figure 4 further shows a plug cover 500 and a louvre 600.

During the assembly, the printed circuit board 200 is inserted into the case 300 and ends of the plug pin 400 protruding to the inside of the case 300 are connected through connection holes 201 formed through the printed circuit board 200 at the corresponding positions and are soldered at the connection holes 201.

Then, the display tube 100 is accommodated within the case 300 and leads 101, such as the above-mentioned leads 61F, are connected to connection portions 202 of the printed circuit board 200. The connection portions 202 are connected to the connection holes 201 via a conductive pattern (not shown) on the printed circuit board 200. The connection portions 202 and the leads 101 are connected (i.e., soldered) through a window portion 301 formed on the rear side of the case 300. At the completion of the above-described connection, the window portion 302 is covered with the plug cover 500 and the louvre 600 is attached to the front wall of the display tube 100.

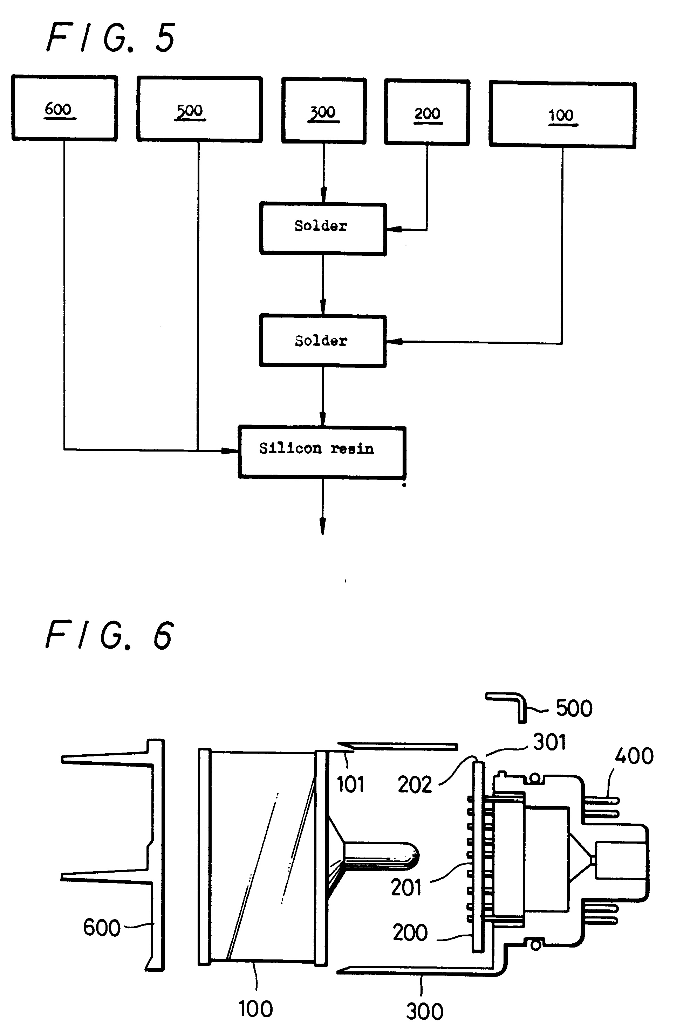

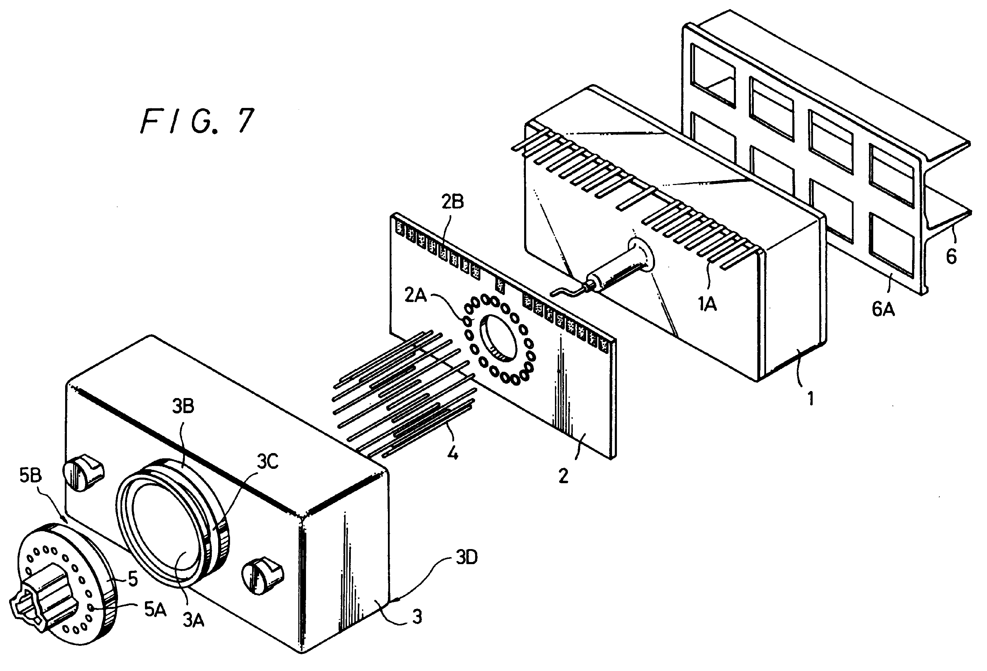

Figure 5 is a process diagram of the above-mentioned assembly process.

As shown in Figure 5, the display tube 100, the printed circuit board (i.e., PCB) 200, the case 300 having the plug pins 400 embedded therein, the plug cover 500 and the louvre 600 are prepared. Initially, the printed circuit board 200 is inserted into the case 300 and soldered therein. In the next process, the display tube 100 is accommodated into the case 300 and soldered therein. Then, the plug cover 500 and the louvre 600 are attached to the case 300 and bonded thereto for example by silicon resin, thereby making the display cell watertight.

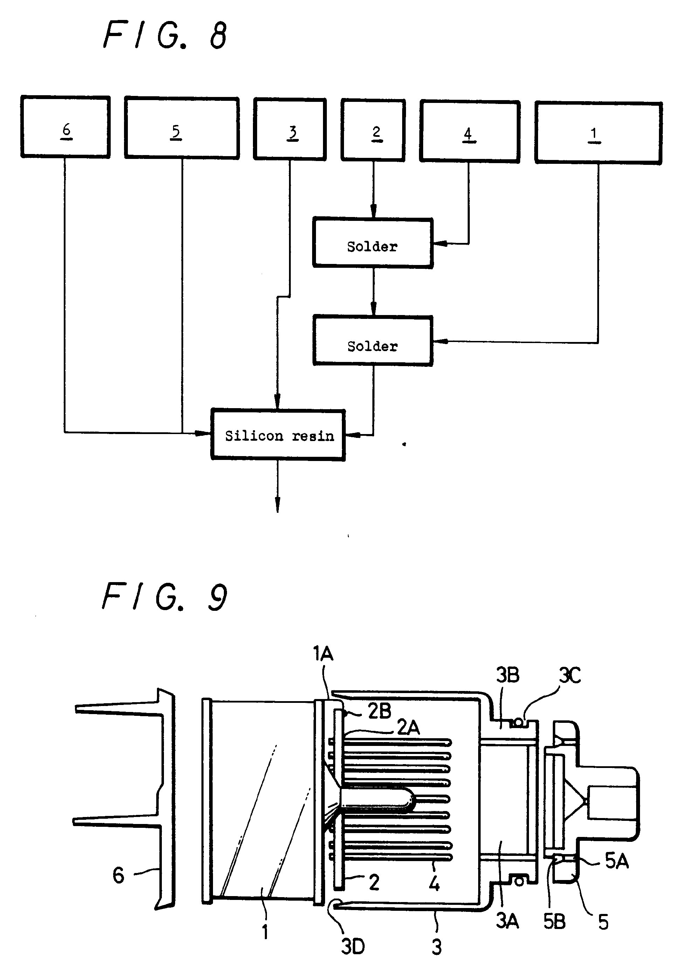

Figure 6 is a side view of a section of the above-mentioned display cell, and to which reference will be made in explaining the assembly-process at the step thereof in which the display tube 100 is accommodated in the case 300. In this step, as shown in Figure 6, the printed circuit board (i.e., PCB) 200 and the plug pins 400 are soldered together and the display tube 100 is accommodated in the case 300. After the leads 101 and the connection portions 202 are connected together, the plug cover 500 and the louvre 600 are attached to the case 300 and the spacings therebetween are made watertight.

In this display tube assembly, the soldering-process between the plug pins 400 and the connection holes 201 and the soldering-process between the leads 101 and the connection portions 202 are performed via the inside of the case 300 or the window portion 301. That is, the soldering-process is carried out in a relatively small spacing, which needs high accuracy in the assembly work. Therefore, such assembly work has hitherto been carried out in a so-called manual fashion.

However, since the window portion 301 is provided at the rear surface of the case 300, a watertight area is increased, and the increase of the watertight area causes the watertight structure to be decreased in reliability. Particularly, in that case, if the window portion 301 is made small, the working property in the soldering-process or the like will be deteriorated considerably, while if the window portion 301 is made large, reliability of the watertight structure will be further decreased.

According to the present invention there is provided a method of assembling a display tube assembly comprising a display tube having a plurality of electrodes, a corresponding plurality of plug pins respectively connected to the plurality of electrodes, a printed circuit board mounted on the display tube, and a case covering the display tube and the printed circuit board with the plug pins protruding outwardly, wherein the method comprises:
a first step wherein the plug pins are mounted on the printed circuit board outside the case;
a second step wherein the printed circuit board is mounted on the display tube outside the case so as to connect the plug pins to the electrodes;
a third step wherein the display tube, with the printed circuit board mounted thereon, is engaged in the case such that the plug pins protrude outwardly of the case; and
a fourth step wherein the case is made watertight.

Thus the plug pins, the printed circuit board and the display tube are coupled together outside the case so that a working property in the assembly process can be improved considerably. Further, since a window portion is not required at the rear surface of the case unlike the prior art, a reliability in the watertight process in the display tube can be improved considerably.

The invention is diagrammatically illustrated by way of example in the accompanying drawings, in which:-
Figure 1 is a partially cutaway plan view illustrating an example of a previously proposed display unit having eight three colour units therein;
Figure 2 is a partially cutaway sectional view illustrating the display unit of Figure 1;

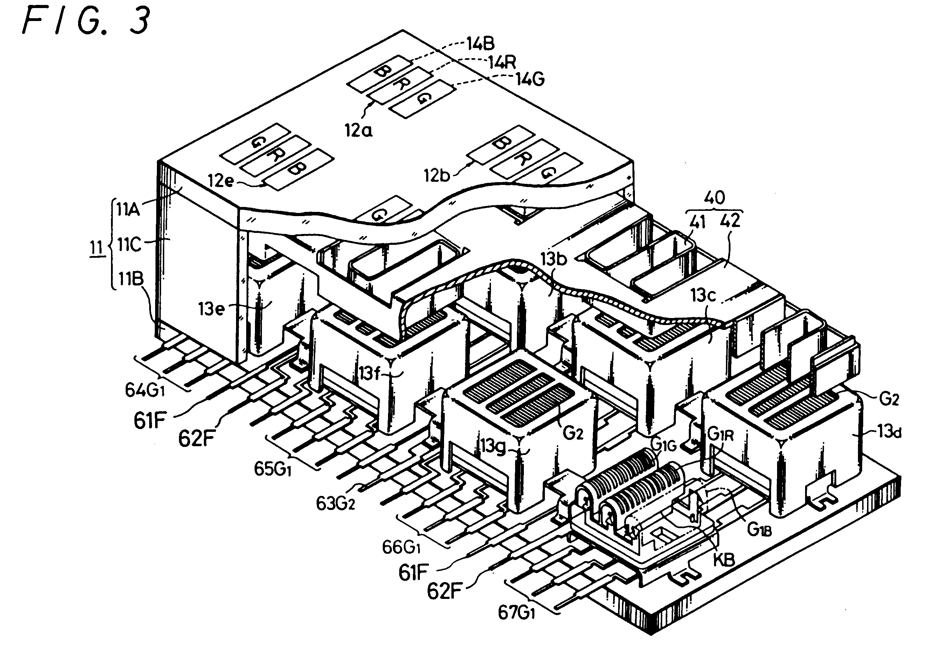

Figure 3 is a partially cutaway perspective view of the display unit of Figures 1 and 2;
Figure 4 is an exploded perspective view to which reference will be made in explaining a display tube assembly of previously proposed kind;
Figure 5 is a process diagram of an assembly process of the display tube assembly of Figure 4;
Figure 6 is a side view of the display tube assembly of Figure 4, and to which reference will be made in explaining a particular step in which step a display tube is accommodated in a case;
Figure 7 is an exploded perspective view from the rear of an embodiment of a display tube assembly according to the invention;
Figure 8 is a process diagram showing an assembly method according to the invention; and
Figure 9 is a side view of a display tube assembly according to the invention, and to which reference will made in explaining a step in which a display tube according to the invention is accommodated in a case.

Referring to Figures 7 to 9 of the drawings, a display tube assembly comprises a display tube 1, a printed circuit board 2, a case 3, a set of plug pins 4, a plug cover 5 and a louvre 6.

As shown in Figure 7, in an assembly-process, the plug pins 4 are each inserted into a respective one of connection holes 2A of the printed circuit board 2 and soldered therein. Then, the printed circuit board 2 is attached to the display tube 1, and leads 1A such as the aforementioned lead 61F and connection portions 2B of the printed circuit board 2 are soldered together. The connection portions 2B are connected to respective ones of the connection holes 2A via a conductive pattern (not shown) on the printed circuit board 2.

The unitarily-connected body formed by the printed circuit board 2, the plug pins 4 and the display tube 1 is accommodated in the case 3. On the rear surface of the case 3, there is mounted a plug base portion 3B having an opening portion 3A into which the plug pins 4 soldered to the printed circuit board 2 are inserted and through which the plug pins 4 protrude toward the rear surface of the case 3.

The plug cover 5 is mounted on the protruding plug pins 4. The plug cover 5 has a configuration corresponding to the plug base portion 3B of the case 3 and has formed therethrough, at positions corresponding to the plug pins 4, insertion holes 5A. Thus, when the plug cover 5 is mounted on the plug pins 4, the plug pins 4 are properly positioned.

The louvre 6 is attached on the front wall of the display tube 1.

Figure 8 is a process diagram of the assembly process of the display tube assembly.

As shown in Figure 8, the display tube 1, the printed circuit board (PCB) 2, the case 3, the plug pins 4, the plug cover 5 and the louvre 6 are prepared, and the plug pins 4 and the printed circuit board 2 are soldered together initially. Then, the printed circuit board 2 and the display tube 1 are soldered together. In the last step, the unitarily-connected body of the printed circuit board 2, the plug pins 4 and the display tube 1 is accommodated in the case 3 and the plug cover 5 and the louvre 6 are attached to the case 3. The spacings therebetween are bonded by a silicon resin or the like, whereby the display tube assembly is made watertight.

Figure 9 shows the printed circuit board 2, the plug pins 4 and the display tube 1 coupled together and the unitarily-connected body of the printed circuit board 2, the plug pins 4 and the display tube 1 about to be accommodated in the case 3. The plug cover 5 and the louvre 6 can then be attached to the case 3 and the spacings therebetween made watertight.

Since the plug pins, the printed circuit board and the display tube are coupled together outside the case, the working stages in the assembly process can be considerably improved. further, since a window portion is not required at the rear side of the case unlike the prior art, the reliability of waterproofing-treatment can be increased considerably.

In the above-described arrangement, the plug cover 5 and the plug base portion 3B are separated at the rear side of a groove 3C at which an O-ring is provided in order to make a spacing between a rear unit and a socket of the unit side watertight when the display element is mounted to the rear unit. Therefore, the separated surface of the plug cover 5 is located at the rear side of the watertight surface provided by the O ring, thus making it possible to increase the reliability in the watertight process more.

When the display tube 1 is accommodated in the case 3, the end portion of the front wall of the case 3 protrudes from the display surface of the display tube 1 by a very small amount and a predetermined chamfered portion 3D is provided at the inside of this protruding portion. Also, the outer periphery of the base portion 6A of the louvre 6 is engaged with the chamfered portion 3D. Thus, when the display tube 1 is accommodated in the case 3, if silicon resin is injected at the chamfered portion 3D and the outer periphery of the base portion 6A of the louvre 6 is engaged with the chamfered portion 3D, it is possible to realize a watertight-process of high reliability with great ease.

Further, a so-called in-shaped groove 5B is formed in the plug cover 5 at its surface opposing the plug base portion 3B so as to connect the end portions of the insertion holes 5A. Thus, when the plug cover 5 is mounted on the plug base portion 3B, the plug pins 4 are guided by the V-shaped groove 5B, whereby the plug cover 5 can easily be mounted on the plug base portion 3B of the case 3.

If desired, the plug cover 5 and the case 3 may be unitarily formed with each other.

Since the plug pins, the printed circuit board and the display tube are coupled together outside the case, the working stages In the assembly process can be improved considerably. Further, since the window portion is not formed at the rear surface of the case unlike the prior art, the reliability of the watertight process can be improved considerably.

## Claims

1. A method of assembling a display tube assembly comprising a display tube (1) having a plurality of electrodes (1A), a corresponding plurality of plug pins (4) respectively connected to the plurality of electrodes (1A), a printed circuit board (2) mounted on the display tube, and a case (3) covering the display tube (1) and the printed circuit board (2) with the plug pins (4) protruding outwardly, wherein the method comprises:
a first step wherein the plug pins (4) are mounted on the printed circuit board (2) outside the case (3);
a second step wherein the printed circuit board (2) is mounted on the display tube (1) outside the case (3) so as to connect the plug pins (4) to the electrodes (1A);
a third step wherein the display tube (1), with the printed circuit board (2) mounted thereon, is engaged in the case (3) such that the plug pins (4) protrude outwardly of the case (3); and
a fourth step wherein the case (3) is made watertight.

2. A method according to claim 1, wherein, during the third step, the plug pins (4) are caused to protrude outwardly through an aperture (3A) in the case (3), and a plug cover (5) of the case, having a plurality of holes (5A) at positions corresponding to the plug pins (4), is mounted over the aperture (3A) such that the plug pins (4) protrude outwardly through the holes (5A) in the plug cover (5).

## Patentansprüche

1. Verfahren zum Zusammenbau einer Anzeigeröhrenbaugruppe, welche eine Anzeigeröhre (1) mit einer Vielzahl von Elektroden (1A), eine entsprechenden Vielzahl von Steckerstiften (4), welche jeweils mit der Vielzahl von Elektroden (1A) verbunden sind, eine gedruckte Schaltungsplatte (2), welche auf der Anzeigeröhre befestigt ist, und ein Gehäuse (3), welches die Anzeigeröhre (1) und die gedruckte Schaltungsplatte (2) mit den nach außen herausstehenden Steckerstiften (4) abdeckt, enthält, wobei das Verfahren umfaßt:
einen ersten Schritt, in welchem die Steckerstifte (4) außerhalb des Gehäuses (3) auf der gedruckten Leiterplatte (2) montiert werden;
einen zweiten Schritt, in welchem die gedruckte Schaltungsplatte (2) außerhalb des Gehäuses (3) auf der Anzeigeröhre (1) montiert wird, um die Steckerstifte (4) mit den Elektroden (1A) zu verbinden;
einen dritten Schritt, in welchem die Anzeigeröhre (1) mit der darauf befestigten gedruckten Schaltungsplatte (2) derart mit dem Gehäuse (3) in Eingriff gebracht wird, daß die Steckerstifte (4) aus dem Gehäuse (3) nach außen herausstehen; und
einen vierten Schritt, in welchem das Gehäuse (3) wasserdicht gemacht wird.

2. Verfahren nach Anspruch 1, bei welchem während des dritten Schritts bewirkt wird, daß die Steckerstifte (4) durch eine Öffnung (3A) in dem Gehäuse (3) nach außen herausstehen, und bei welchem eine Steckerumhüllung (5) des Gehäuses mit einer Vielzahl von Löchern (5A) an Stellen, welche den Steckerstiften (4) entsprechen, derart über der Öffnung (3A) montiert wird, daß die Steckerstifte (4) nach außen durch die Löcher (5A) in der Steckerumhüllung (5) hervorstehen.

## Revendications

1. Procédé d'assemblage d'un dispositif d'affichage à tubes comprenant un tube d'affichage (1) ayant une pluralité d'électrodes (1A), une pluralité correspondante de broches de fiche mâle (4) respectivement reliées à la pluralité d'électrodes (1A), une carte de circuit imprimé (2) montée sur le tube d'affichage, et un boîtier (3) couvrant le tube d'affichage (1) et la carte de circuit imprimé (2) avec les broches de fiche mâle (4) faisant saillie vers l'extérieur, dans lequel le procédé comprend :
une première étape dans laquelle les broches de fiche mâle (4) sont montées sur la carte de circuit imprimé (2) à l'extérieur du boîtier (3) ;
une seconde étape dans laquelle la carte de circuit imprimé (2) est montée sur le tube d'affichage (1) à l'extérieur du boîtier (3) afin de relier les broches de fiche mâle (4) aux électrodes (1A) ;
une troisième étape dans laquelle le tube d'affichage (1), avec la carte de circuit imprimé (2) montée sur celle-ci, se met dans le boîtier (3) de sorte que les broches de fiche mâle (4) font saillie à l'extérieur du boîtier (3); et
une quatrième étape dans laquelle le boîtier (3) est rendu étanche à l'eau.

2. Procédé selon la revendication 1, dans lequel, pendant la troisième étape, les broches de fiche mâle (4) font saillie vers l'extérieur via une ouverture (3A) dans le boîtier (3), et un couvercle de fiche mâle (5) du boîtier, ayant une pluralité de trous (5A) à des positions correspondant aux broches de fiche mâle (4), est monté sur l'ouverture (3A) de telle sorte que les broches de fiche mâle (4) font saillie à l'extérieur via les trous (5A) dans le couvercle de fiche mâle (5).
